# EUROPEAN PATENT APPLICATION

(11) **EP 4 460 106 A1**
(43) Date of publication of application: **06.11.2024**
(21) Application number: 21969602.8
(22) Date of filing: 30.12.2021
(51) Int. Cl.: H04W 52/02

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2021/143236
(87) International publication number: WO 2023/123241

(57) **Abstract**

Embodiments of this application provide a wireless communication method, a terminal device, and a network device. The method includes: receiving indication information by using a wake up radio WUR signal, where the indication information is used to instruct at least one secondary cell SCell be in dormancy, exit from dormancy, be activated, or be deactivated; and the at least one SCell is a first SCell or a first secondary cell group SCG. The method provided in this application can reduce power consumption of a terminal device.

## Description

### TECHNICAL FIELD

Embodiments of this application relate to the communications field, and more specifically, to a wireless communication method, a terminal device, and a network device.

### BACKGROUND

Up to now, a new radio (New Radio, NR) system has introduced a secondary cell (Secondary Cell, SCell) dormancy (SCell dormancy) function that is based on an energy saving signal. For each SCell or secondary cell group (Secondary Cell Group, SCG), a network device configures a dormant BWP (dormant BWP) that is dedicated to dormancy. Based on this, in a case that a terminal device activates an SCell or SCG and there is no data transmission, the network device may instruct, by using an energy saving signal carried in downlink control information (Downlink Control Information, DCI), the terminal device to activate a dormant BWP on a corresponding SCell or SCG. On the dormant BWP, the terminal device may not monitor a physical downlink control channel (Physical Downlink Control Channel, PDCCH), but just measure and report channel state information (Channel State Information, CSI), so that power consumption of the terminal device is reduced.

However, with the development of technologies, the SCell dormancy function based on the energy saving signal still cannot meet users' demand for energy saving. Thus, how to reduce power consumption of a terminal device is still a technical problem that needs to be urgently resolved in the art.

### SUMMARY

Embodiments of this application provide a wireless communication method, a terminal device, and a network device, to reduce power consumption of a terminal device.

According to a first aspect, this application provides a wireless communication method, including:
receiving indication information by using a wake up radio WUR signal,
where the indication information is used to instruct at least one secondary cell SCell be in dormancy, exit from dormancy, be activated, or be deactivated; and the at least one SCell is a first SCell or a first secondary cell group SCG.

According to a second aspect, this application provides a wireless communication method, including:
transmitting indication information by using a wake up radio WUR signal,
where the indication information is used to instruct at least one secondary cell SCell be in dormancy, exit from dormancy, be activated, or be deactivated; and the at least one SCell is a first SCell or a first secondary cell group SCG.

According to a third aspect, this application provides a terminal device, configured to perform the method according to the first aspect or implementations of the first aspect. Specifically, the terminal device includes a functional module configured to perform the method according to the first aspect or implementations of the first aspect.

In an implementation, the terminal device may include a processing unit, where the processing unit is configured to execute a function related to information processing. For example, the processing unit may be a processor.

In an implementation, the terminal device may include a transmitting unit and/or a receiving unit. The transmitting unit is configured to execute a function related to transmitting, and the receiving unit is configured to execute a function related to receiving. For example, the transmitting unit may be a transmitting set or a transmitter, and the receiving unit may be a receiving set or a receiver. For another example, the terminal device is a communications chip, the transmitting unit may be an input circuit or an interface of the communications chip, and the transmitting unit may be an output circuit or an interface of the communications chip.

According to a fourth aspect, this application provides a network device, configured to perform the method according to the second aspect or implementations of the second aspect. Specifically, the network device includes a functional module configured to perform the method according to the second aspect or implementations of the second aspect.

In an implementation, the network device may include a processing unit, where the processing unit is configured to execute a function related to information processing. For example, the processing unit may be a processor.

In an implementation, the network device may include a transmitting unit and/or a receiving unit. The transmitting unit is configured to execute a function related to transmitting, and the receiving unit is configured to execute a function related to receiving. For example, the transmitting unit may be a transmitting set or a transmitter, and the receiving unit may be a receiving set or a receiver. For another example, the network device is a communications chip, the receiving unit may be an input circuit or an interface of the communications chip, and the transmitting unit may be an output circuit or an interface of the communications chip.

According to a fifth aspect, this application provides a terminal device, including a processor and a memory. The memory is configured to store a computer program, and the processor is configured to invoke the computer program stored in the memory and run the computer program to perform the method according to the first aspect or implementations of the first aspect.

In an implementation, a quantity of the processor is one or more, and a quantity of the memory is one or more.

In an implementation, the memory may be integrated with the processor, or the memory is disposed separately from the processor.

In an implementation, the terminal device further includes a transmitting set (transmitter) and a receiving set (receiver).

According to a sixth aspect, this application provides a network device, including a processor and a memory. The memory is configured to store a computer program, and the processor is configured to invoke the computer program stored in the memory and run the computer program to perform the method according to the second aspect or implementations of the second aspect.

In an implementation, a quantity of the processor is one or more, and a quantity of the memory is one or more.

In an implementation, the memory may be integrated with the processor, or the memory is disposed separately from the processor.

In an implementation, the network device further includes a transmitting set (transmitter) and a receiving set (receiver).

According to a seventh aspect, this application provides a chip, configured to implement the method according to any one of the first aspect and the second aspect or implementations of the first aspect and the second aspect. Specifically, the chip includes a processor, configured to invoke a computer program from a memory and run the computer program, so that a device installed with the chip performs the method according to any one of the first aspect and the second aspect or implementations of the first aspect and the second aspect.

According to an eighth aspect, this application provides a computer-readable storage medium, configured to store a computer program, where the computer program causes a computer to perform the method according to any one of the first aspect and the second aspect or implementations of the first aspect and the second aspect.

According to a ninth aspect, this application provides a computer program product, including computer program instructions, where the computer program instructions cause a computer to perform the method according to any one of the first aspect and the second aspect or implementations of the first aspect and the second aspect.

According to a tenth aspect, this application provides a computer program, and when the computer program runs on a computer, the computer performs the method according to any one of the first aspect and the second aspect or implementations of the first aspect and the second aspect.

Based on the foregoing technical solution, receiving indication information by using a WUR signal is equivalent to receiving the indication information by using a radio signal. Compared with a manner of receiving the indication information by monitoring a PDCCH signal, the foregoing manner can reduce power consumed in receiving the indication information and power consumed in demodulating the indication information.

### BRIEF DESCRIPTION OF DRAWINGS

FIG. 1 is an example of a system framework according to an embodiment of this application.
FIG. 2 is an example of a DRX cycle according to an embodiment of this application.
FIG. 3 is a schematic diagram of receiving an energy saving signal by using a PDCCH according to an embodiment of this application.
FIG. 4 is a schematic diagram of receiving an energy saving signal by using a wake up receiver and a primary receiver according to an embodiment of this application.
FIG. 5 is a schematic flowchart of a wireless communication method according to an embodiment of this application.
FIG. 6 is a schematic diagram of instructing an SCG be in dormancy or exit from dormancy according to an embodiment of this application.
FIG. 7 is another schematic diagram of instructing an SCG be in dormancy or exit from dormancy according to an embodiment of this application.
FIG. 8 is a schematic diagram of instructing an SCell to be activated or be deactivated according to an embodiment of this application.
FIG. 9 is another schematic diagram of instructing an SCell to be activated or be deactivated according to an embodiment of this application.
FIG. 10 is a schematic block diagram of a terminal device according to an embodiment of this application.
FIG. 11 is a schematic block diagram of a network device according to an embodiment of this application.
FIG. 12 is a schematic block diagram of a communications device according to an embodiment of this application.
FIG. 13 is a schematic block diagram of a chip according to an embodiment of this application.

### DESCRIPTION OF EMBODIMENTS

The following describes the technical solutions in embodiments of this application with reference to the accompanying drawings.

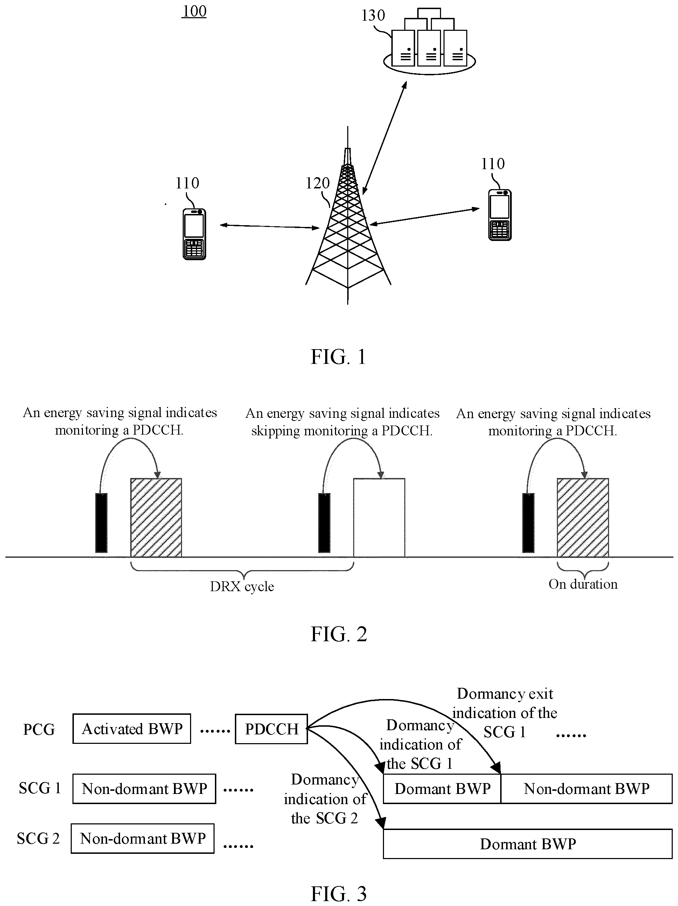

FIG. 1 is an example of a system framework according to an embodiment of this application.

As shown in FIG. 1, the communications system 100 may include terminal devices 110 and a network device 120. The network device 120 may communicate with the terminal devices 110 by using air interfaces. Multi-service transmission is supported between the terminal devices 110 and the network device 120.

It should be understood that the communications system 100 is merely used as an example for description in this embodiment of this application, but this embodiment of this application is not limited thereto. In other words, the technical solutions in embodiments of this application may be applied to various communications systems, for example, a long term evolution (Long Term Evolution, LTE) system, an LTE time division duplex (Time Division Duplex, TDD) system, a universal mobile telecommunications system (Universal Mobile Telecommunication System, UMTS), an Internet of things (Internet of Things, IoT) system, a narrow band Internet of things (Narrow Band Internet of Things, NB-IoT) system, an enhanced machine-type communications (enhanced Machine-Type Communications, eMTC) system, a 5G communications system (also referred to as a new radio (New Radio, NR) communications system), or a future communications system.

In the communications system 100 shown in FIG. 1, the network device 120 may be an access network device that communicates with the terminal devices 110. The access network device may provide communication coverage for a specific geographical area, and may communicate with a terminal device 110 (for example, a UE) located in the coverage area.

The network device 120 may be an evolved NodeB (Evolutional Node B, eNB or eNodeB) in a long term evolution (Long Term Evolution, LTE) system, or a next generation radio access network (Next Generation Radio Access Network, NG RAN) device, or a gNB (gNB) in an NR system, or a wireless controller in a cloud radio access network (Cloud Radio Access Network, CRAN), or the network device 120 may be a relay station, an access point, a vehicle-mounted device, a wearable device, a hub, a switch, a bridge, a router, or a network device in a future evolved public land mobile network (Public Land Mobile Network, PLMN).

The terminal device 110 may be any terminal device, which includes but is not limited to a terminal device that is connected to the network device 120 or another terminal device by using a wired or wireless connection.

For example, the terminal device 110 may be an access terminal, a user equipment (User Equipment, UE), a subscriber unit, a subscriber station, a mobile site, a mobile station, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, SIP) phone, an IoT device, a satellite handheld terminal, a wireless local loop (Wireless Local Loop, WLL) station, a personal digital assistant (Personal Digital Assistant, PDA), a handheld device with a wireless communication function, a computing device, another processing device connected to a wireless modem, a vehicle-mounted device, a wearable device, a terminal device in a 5G network, or a terminal device in a future evolved network.

The terminal device 110 may be configured for device to device (Device to Device, D2D) communication.

The wireless communications system 100 may further include a core network device 130 that communicates with a base station. The core network device 130 may be a 5G core network (5G Core, 5GC) device, for example, an access and mobility management function (Access and Mobility Management Function, AMF), for another example, an authentication server function (Authentication Server Function, AUSF), for still another example, a user plane function (User Plane Function, UPF), or for yet another example, a session management function (Session Management Function, SMF). Optionally, the core network device 130 may also be an evolved packet core (Evolved Packet Core, EPC) device of an LTE network, for example, a session management function + core packet gateway (Session Management Function + Core Packet Gateway, SMF+PGW-C) device of a core network. It should be understood that the SMF+PGW-C may implement both a function that can be implemented by an SMF and a function that can be implemented by a PGW-C. In a network evolution process, the foregoing core network device may also be called another name, or a new network entity may be formed by dividing a function of the core network, which is not limited in embodiments of this application.

Communication between functional units in the communications system 100 may be further implemented by establishing a connection by using a next generation network (next generation, NG) interface.

For example, the terminal device establishes an air interface connection to an access network device by using an NR interface, to transmit user plane data and control plane signalling. The terminal device may establish a control plane signalling connection to an AMF by using an NG interface 1 (N1 for short). The access network device, for example, a next-generation radio access base station (gNB), may establish a user plane data connection to a UPF by using an NG interface 3 (N3 for short). The access network device may establish a control plane signalling connection to the AMF by using an NG interface 2 (N2 for short). The UPF may establish a control plane signalling connection to an SMF by using an NG interface 4 (N4 for short). The UPF may exchange user plane data with a data network by using an NG interface 6 (N6 for short). The AMF may establish a control plane signalling connection to the SMF by using an NG interface 11 (N11 for short). The SMF may establish a control plane signalling connection to a PCF by using an NG interface 7 (N7 for short).

FIG. 1 exemplarily shows a base station, a core network device, and two terminal devices. Optionally, the wireless communications system 100 may include a plurality of base station devices, and a coverage area of each base station may include another quantity of terminal devices. This is not limited in embodiments of this application.

It should be understood that, in this embodiment of this application, each device that has a communication function in a network or a system may be referred to as a communications device. The communications system 100 shown in FIG. 1 is used as an example. The communications device may include a network device 120 and a terminal device 110 that have a communication function. The network device 120 and the terminal device 110 may be the foregoing devices, and details are not described herein again. The communications device may further include another device in the communications system 100, such as a network controller, a mobility management entity, or another network entity. This is not limited in embodiments of this application.

It should be understood that the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be further understood that the term "corresponding" mentioned in embodiments of this application may mean that there is a direct or indirect correspondence between two elements, or that there is an association between two elements, or that there is a relationship of "indicating" and "being indicated", "configuring" and "being configured", or the like. It should be further understood that the "pre-defined" or "pre-defined rule" mentioned in embodiments of this application may be implemented in a manner in which corresponding code, a table, or other related information used for indication is pre-stored in a device (for example, including a terminal device and a network device). A specific implementation is not limited in this application. For example, "pre-defined" may be "defined" in a protocol. It should be further understood that in embodiments of this application, the "protocol" may be a standard protocol in the communication field, for example, may include an LTE protocol, an NR protocol, and a related protocol applied to a future communications system. This is not limited in this application.

During 5G evolution, a higher requirement is put forward for electricity saving of a user equipment (User Equipment, UE).

In some embodiments, energy saving of the UE may be implemented by using a discontinuous reception (Discontinuous Reception, DRX) mechanism. For the DRX mechanism, in each on duration (on duration), the UE needs to continuously detect a physical downlink control channel (Physical Downlink Control Channel, PDCCH) to determine whether a base station schedules data transmission transmitted to the UE. However, most UEs may have, for a long period of time, no need to receive data transmission, but still need to maintain periodic wake-up mechanisms to monitor possible downlink transmission. For such UEs, electricity saving can be further optimized.

In some embodiments, energy saving of the UE may be further implemented by introducing an energy saving signal. The energy saving signal may be used in combination with the DRX mechanism. The terminal device receives the energy saving signal before a DRX on duration. When the terminal device has data transmission in a DRX cycle, the energy saving signal is used to wake up the terminal device, to monitor a PDCCH in a DRX on duration. Otherwise, when the terminal device does not have data transmission in a DRX cycle, the energy saving signal is used to skip waking up the terminal device, and a terminal does not need to monitor a PDCCH in a DRX on duration. Compared with the DRX mechanism, when the terminal device has no data transmission, the terminal may skip monitoring the PDCCH in the DRX on duration, to further save energy. Optionally, the energy saving signal may be carried by using a downlink control information (Downlink Control Information, DCI) format (format) 2_6. Time at which the terminal device is not in the DRX on duration is referred to as inactive time; and time at which the terminal device is in the DRX on duration is referred to as active time.

FIG. 2 is an example of a DRX cycle according to an embodiment of this application.

As shown in FIG. 2, a terminal device receives an energy saving signal before a DRX on duration. The energy saving signal may be used to instruct the terminal device to monitor or not to monitor a PDCCH. When the energy saving signal is used to instruct the terminal device to monitor the PDCCH, the terminal device monitors the PDCCH in a corresponding DRX on duration. When the energy saving signal is used to instruct the terminal device not to monitor the PDCCH, the terminal device does not monitor the PDCCH in a corresponding DRX on duration. Compared with the DRX mechanism, when the terminal device has no data transmission, the terminal may skip monitoring the PDCCH in the DRX on duration, to further save energy.

In some embodiments, alternatively, energy saving of UE may be further optimized by introducing a secondary cell (Secondary Cell, SCell)/secondary cell group (Secondary Cell Group, SCG) dormancy (dormancy) function. A network configures a dedicated dormant (dormant) bandwidth part (Bandwidth Part, BWP) for each SCell/SCG. In a case that an SCell/SCG is activated but has no data transmission, DCI may be used to instruct a UE to activate a dormant BWP on a corresponding SCell/SCG. The UE does not monitor a PDCCH on the dormant BWP, and performs only channel state information (Channel State Information, CSI) measurement and reporting, so that electricity saving of the UE is facilitated.

For example, a dormancy trigger process of the SCell/SCG includes two cases:
Case 1: Dormancy triggering of the SCell/SCG in a time different from active time.

A dormancy indication for the dormancy triggering of the SCell/SCG in the time different from the active time may be carried in a dedicated bit in a DCI format 2_6. Because the dormancy indication may be a multi-terminal indication, or for another reason, a dormancy indication of each terminal device is limited to five bits or fewer bits. Each bit is used to indicate dormancy or non-dormancy of the SCell/SCG. The SCG may include one or more SCells. The dormancy of the SCG may be dormancy of each SCell in the SCG. The SCG exiting dormancy may be each SCell in the SCG exiting dormancy. From the perspective of energy consumption of a radio frequency design of a terminal, enabling/disabling of carrier frequencies (namely, SCells) of a same frequency band may be associated. A difference between power consumed in simultaneously enabling carrier frequencies in a frequency band for receiving and transmitting and power consumed in separately enabling the carrier frequencies in the frequency band is small. A carrier group (namely, an SCG) is configured and determined by a network device.

A terminal device configures only one dormant BWP on one SCell. When the terminal device is instructed to exit from a dormant BWP, it is required to select a non-dormancy BWP. A network device may configure a first non-dormancy BWP for the terminal device. To reduce unnecessary BWP switching between a terminal side and a base station, an NR specifies that the terminal device is switched to the first non-dormancy BWP only when current activation is for a dormant BWP and a dormancy exit indication is received. The terminal only needs to maintain a current BWP when the current activation is for a non-dormancy BWP and the dormancy exit indication is received.

Case 2: Dormancy triggering of the SCell/SCG in active time.

The dormancy triggering of the SCell/SCG in the active time is indicated by using a common PDCCH.

Using the PDCCH for indication may include the following two manners.

### Manner 1:

Add a dedicated bit to scheduling DCI that is used to schedule data transmission. Because the scheduling DCI already has a large load, the quantity of the dedicated bit is also limited to 5 or a smaller value. Each bit is used to indicate dormancy or non-dormancy of the SCell/SCG. Similarly, the base station may configure an SCell group by using the feature that enabling/disabling of carrier frequencies of a same frequency band is associated, thereby efficiently using dormant signalling. The dedicated bit is added in DCI formats 0_1 and 1_1. This manner is characterized in that the scheduling DCI may initiate a dormancy indication at any time. However, even if SCell dormancy needs not to be changed, the scheduling DCI still needs to transmit the dedicated bit. This results in unnecessary overhead. In this case, using Manner 2 may be taken into consideration.

### Manner 2:

Redefine a field in the scheduling DCI, and use the scheduling DCI dedicatedly as an SCell dormancy indication. When all frequency resource indication fields of the DCI format 1_1 are 0 or 1, it indicates that the following fields of the scheduling DCI are used to indicate dormancy of 15 SCells:
a modulation and coding scheme (Modulation and Coding Scheme, MCS) of a transport block 1;
a new data indicator of the transport block 1;
a redundancy version indication of the transport block 1;
a hybrid automatic repeat request (Hybrid Automatic Repeat Request, HARQ) process (process) number;
an antenna port(s) (Antenna port(s)); and
an initialization value of a demodulation reference signal (Demodulation Reference Signal, DMRS) sequence.

In this manner, the scheduling DCI is not used to schedule data, but still needs to occupy an entire DCI format. When there is a small quantity of SCells/SCGs, overhead is high. A HARQ-ACK of an NR is feedback on decoding of scheduled data. A communication handshake between a base station and a terminal may be implemented in Manner 1. This facilitates synchronization on both sides. In Manner 2, another manner is required to support the handshake. Therefore, for Manner 2, HARQ-ACK feedback timing based on a PDCCH needs to be further introduced. For example, a fixed timing relationship may be used at different subcarrier spacing (SCS).

For the dormancy triggering of the SCell/SCG in the active time, Manner 1 and Manner 2 may be flexibly configured by the base station according to a scenario requirement.

It can be learned from the above that triggering the SCell/SCG to exit from dormancy is similar to triggering the SCell/SCG be in dormancy. The base station configures the first non-dormancy BWP for the terminal device. Regardless of a case in which a BWP inactivity timer (bwp-InactivityTimer) expires, in the active time, the terminal device is switched to the first non-dormancy BWP only when current activation is for a dormant BWP and a dormancy exit indication is received. The terminal device only needs to maintain a current BWP when the current activation is for a non-dormancy BWP and the dormancy exit indication is received.

FIG. 3 is a schematic diagram of receiving an energy saving signal by using a PDCCH according to an embodiment of this application.

As shown in FIG. 3, an activated BWP on a PCell of a terminal device is an activated BWP; an activated BWP on an SCell 1 of the terminal device is a non-dormancy BWP; and an activated BWP on an SCell 2 of the terminal device is a non-dormancy BWP. The terminal device may receive a dormancy indication of the SCell 1 by using a PDCCH on the PCell. In this case, the terminal device activates a dormant BWP on the SCell 1. Further, the terminal device may also receive a dormancy exit indication of the SCell 1 by using a PDCCH on the PCell. In this case, the terminal device activates a non-dormancy BWP on the SCell 1. Similarly, the terminal device may receive a dormancy indication of the SCell 2 by using a PDCCH on the PCell. In this case, the terminal device activates a dormant BWP on the SCell 2.

In some embodiments, for further electricity saving of UE, introduction of a wake up receiver may also be taken into consideration, to receive an energy saving signal.

The wake up receiver has features of extremely low costs, extremely low complexity, and extremely low power consumption. A signal received by the wake up receiver is a radio signal, and is mainly received in an envelope-detection-based manner. The radio signal may be an envelope signal obtained by performing ASK modulation on a carrier signal. Demodulation of the envelope signal may be completed by driving a low-power circuit based on energy provided by a radio frequency signal. Therefore, the wake up receiver may be passive. Alternatively, the wake up receiver may be powered by using the terminal device. No matter which power supply manner is used, power consumption of the wake up receiver is greatly reduced compared with a conventional receiver of the UE.

However, because a signal, a waveform, a modulation mode, and a demodulation mode that are received by the wake up receiver are different from a signal, a waveform, a modulation mode, and a demodulation mode that are carried in a PDCCH, how to use the wake up receiver to receive the foregoing energy saving signal is a technical problem that needs to be urgently resolved in the art. In a possible implementation, the wake up receiver may receive the radio signal transmitted by the network device, to trigger the terminal device to receive the signal carried in the PDCCH.

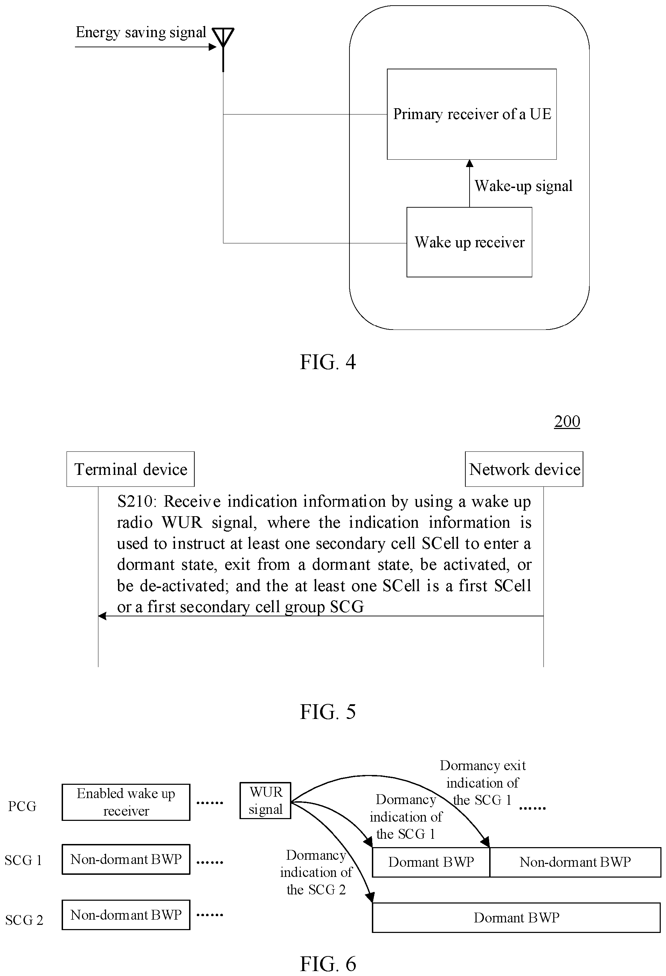

FIG. 4 is a schematic diagram of receiving an energy saving signal by using a wake up receiver and a primary receiver according to an embodiment of this application.

As shown in FIG. 4, a terminal device may include a wake up receiver and a primary receiver of a UE. The wake up receiver is connected to the primary receiver of the UE. The wake up receiver may be configured to trigger enabling of the primary receiver. The wake up receiver may be combined with the UE, to be used as an additional module of a receiving set of the UE; or may be separately used as a wake-up functional module of the UE. The wake up receiver first receives an energy saving signal in a form of a radio signal. The energy saving signal received by the wake up receiver may be used as a wake-up signal to wake up the primary receiver. After receiving the wake-up signal, the primary receiver is triggered to receive an energy saving signal carried in a PDCCH.

It can be learned that in a case in which the wake up receiver is introduced, if the terminal device also receives a dormancy indication or a dormancy exit indication based on the PDCCH, the wake up receiver first receives an energy saving signal in a form of a radio signal, and is configured to wake up the primary receiver, although electricity saving can be implemented by disabling a master transceiver. The dormancy indication depends on reception of the PDCCH; and for the reception of the PDCCH, a master transceiver of the UE needs to be enabled. Therefore, a radio signal used for waking up the primary receiver needs to be additionally transmitted, which increases power consumption of the terminal device. In view of this, embodiments of this application provide a wireless communication method, a terminal device, and a network device, to reduce power consumption of a terminal device.

FIG. 5 is a schematic flowchart of a wireless communication method 200 according to an embodiment of this application. The wireless communication method 200 may be executed by a terminal device and a network device interactively. The terminal device shown in FIG. 5 may be the terminal devices shown in FIG. 1. The network device shown in FIG. 5 may be the access network device shown in FIG. 1.

As shown in FIG. 5, the method 200 may include the following step.

S210: The terminal device receives indication information by using a wake up radio (wake up radio, WUR) signal.

The indication information is used to instruct at least one secondary cell SCell be in dormancy, exit from dormancy, be activated, or be deactivated. The at least one SCell is a first SCell or a first secondary cell group SCG.

For example, the network device indicates, by using the WUR signal, the terminal device that at least one SCell is in dormancy, exit from dormancy, is activated, or is deactivated.

For example, the indication information is used to instruct the first SCell be in dormancy, exit from dormancy, be activated, or be deactivated.

For example, the indication information is used to instruct the first SCG be in dormancy, exit from dormancy, be activated, or be deactivated.

For example, the WUR signal may be a signal that can be received and demodulated by a wake up receiver. The wake up receiver may be passive, or may be powered by using the terminal device. Optionally, the WUR signal may be received in an envelope-detection-based manner. Optionally, the WUR signal may be an envelope signal obtained by performing amplitude shift keying (ASK) modulation on a carrier signal. Optionally, demodulation of the WUR signal may be completed by driving a low-power circuit based on energy provided by a radio frequency signal.

In this embodiment, receiving indication information by using a WUR signal is equivalent to receiving the indication information by using a radio signal. Compared with a manner of receiving the indication information by monitoring a PDCCH signal, the foregoing manner can reduce power consumed in receiving the indication information and power consumed in demodulating the indication information.

It should be understood that in other alternative embodiments, the SCell in this application may be equivalently replaced with a similar term such as a carrier. This is not specifically limited in this application.

In some embodiments, S210 may include:
receiving, by the terminal device on a primary cell PCell or a primary cell group PCG, the indication information by using the WUR signal.

In some embodiments, S210 may include:
receiving, by the terminal device on a second SCell or a second SCG, the indication information by using the WUR signal.

In some embodiments, the first SCell is the second SCell, or the first SCell is different from the second SCell.

For example, the terminal device receives, on the first SCell, the indication information by using the WUR signal.

For example, the terminal device receives, on the first SCG, the indication information by using the WUR signal.

For example, the terminal device receives, on an SCell different from the first SCell, the indication information by using the WUR signal.

For example, the terminal device receives, on an SCG different from the first SCG, the indication information by using the WUR signal.

In some embodiments, the first SCG is the second SCG, or the first SCG is different from the second SCG.

In some embodiments, the indication information is used to instruct the at least one SCell be in dormancy; and the method 200 may further include:
activating a dormant BWP on each of the at least one SCell.

For example, the indication information is used to instruct the first SCell be in dormancy. After receiving the indication information, the terminal device activates a dormant BWP on the first SCell.

For example, the indication information is used to instruct the first SCG be in dormancy. After receiving the indication information, the terminal device activates a dormant BWP on each SCell in the first SCG.

In some embodiments, the indication information is used to instruct the at least one SCell to exit from dormancy; and the method 200 may further include:
activating a non-dormancy BWP on each of the at least one SCell.

For example, the indication information is used to instruct the first SCell to exit from dormancy. After receiving the indication information, the terminal device activates a non-dormancy BWP on the first SCell.

For example, the indication information is used to instruct the first SCG to exit from dormancy. After receiving the indication information, the terminal device activates a non-dormancy BWP on each SCell in the first SCG.

For example, when the indication information is used to instruct the at least one SCell to exit from dormancy, and a currently activated BWP on the at least one SCell is a dormant BWP, the terminal device activates a non-dormancy BWP on each of the at least one SCell.

In some embodiments, the non-dormancy BWP is pre-defined.

It should be understood that the "pre-defined" may be implemented in a manner in which corresponding code, a table, or other related information used for indication is pre-stored in a device (for example, including a terminal device and a network device). A specific implementation is not limited in this application. For example, "pre-defined" may be "defined" in a protocol. Optionally, the "protocol" may be a standard protocol in the communication field, which may include, for example, an LTE protocol, an NR protocol, and a related protocol applied to a future communications system. This is not specifically limited in this application.

Certainly, in other alternative embodiments, the non-dormancy BWP may alternatively be configured by the network device or determined via negotiation with the network device.

In some embodiments, the indication information is used to instruct the at least one SCell to exit from dormancy; and the method 200 may further include:
maintaining an activated BWP on each of the at least one SCell.

For example, the indication information is used to instruct the first SCell to exit from dormancy. After receiving the indication information, the terminal device maintains an activated BWP on the first SCell.

For example, the indication information is used to instruct the first SCG to exit from dormancy. After receiving the indication information, the terminal device maintains an activated BWP on each SCell in the first SCG.

For example, when the indication information is used to instruct the at least one SCell to exit from dormancy, and a currently activated BWP on the at least one SCell is a non-dormancy BWP, the terminal device maintains the activated BWP on each of the at least one SCell.

In some embodiments, the indication information is used to instruct the at least one SCell be in dormancy or exit from dormancy; and S210 may include:
when the at least one SCell is dormant, receiving the indication information by using the WUR signal.

In these embodiments, because a primary receiver of the terminal device is in a disabled state when the at least one SCell is dormant, the indication information may be received by using the WUR signal.

For example, the indication information is used to instruct the first SCell be in dormancy or exit from dormancy. When the first SCell is dormant, the terminal device may receive, on the first SCell or another dormant SCell, the indication information by using the WUR signal.

For example, the indication information is used to instruct the first SCG be in dormancy or exit from dormancy. When the first SCG is dormant, the terminal device may receive, on the first SCG or another dormant SCG, the indication information by using the WUR signal.

For example, the at least one SCell being dormant includes each of the at least one SCell being dormant. For example, the first SCG being dormant includes each SCell in the first SCG being dormant.

In some embodiments, the method 200 may further include:
when the at least one SCell is non-dormancy, receiving the indication information by using a physical downlink control channel PDCCH or downlink control information DCI.

In these embodiments, because a primary receiver of the terminal device is in an enabled state when the at least one SCell is non-dormancy, the indication information may be received by using the PDCCH or the DCI. For example, the indication information may be received by using DCI that is used for scheduling data or not used for scheduling data. For example, the indication information may be received by the foregoing Case 1 or Case 2.

For example, the indication information is used to instruct the first SCell be in dormancy or exit from dormancy. When the first SCell is non-dormancy, the terminal device may receive, on the first SCell, a PCell, or another non-dormancy SCell, the indication information by using the PDCCH or the DCI.

For example, the indication information is used to instruct the first SCG be in dormancy or exit from dormancy. When the first SCG is non-dormancy, the terminal device may receive, on the first SCG, a PCG, or another non-dormancy SCG, the indication information by using the PDCCH or the DCI.

For example, the at least one SCell being non-dormancy includes each of the at least one SCell being non-dormancy. For example, the first SCG being non-dormancy includes each SCell in the first SCG being non-dormancy.

The following describes solutions of this application with reference to specific embodiments.

### Embodiment 1

In this embodiment, a terminal device receives indication information by using a WUR signal, where the indication information is used to instruct a first SCG be in dormancy.

In a carrier aggregation (Carrier Aggregation, CA) scenario and a dual connectivity (Dual Connectivity, DC) scenario, in a case that the first SCG is activated but has no data transmission, the terminal device may be instructed, by using DCI, be in dormancy on the first SCG, that is, to activate a dormant BWP on the first SCG. On the dormant BWP, the terminal device does not monitor any PDCCH, and performs only CSI measurement and reporting, which helps reduce power consumption of the terminal device.

When the terminal device has a wake up receiver, the terminal device may receive some wake-up signals related to energy saving, so that the terminal device can disable a master transceiver to implement electricity saving. When the master transceiver is disabled, the terminal device cannot detect any PDCCH.

When the first SCG is activated but has no data transmission, the terminal device may have enabled the wake up receiver and disabled the master transceiver. In addition, because the first SCG is activated, the first SCG may be in a non-dormancy. In this state, when the first SCG has no data transmission, the first SCG needs to be instructed, by using the indication information, to enter the dormancy. If the indication information is received by using a PDCCH, the wake up receiver needs to be used first to receive the wake-up signals, thereby waking up the master transceiver of the terminal device; and then, the master transceiver is used to receive the PDCCH, thereby obtaining the indication information. However, in this process of waking up and then receiving, power consumption and a transmission delay of the terminal are increased.

In this embodiment, the indication information used for indicating the first SCG be in dormancy is received by using the WUR signal, so that electricity consumed by the terminal device in detecting and demodulating the PDCCH can be further reduced. In other words, when the first SCG is activated but has no data transmission, the terminal device may have enabled the wake up receiver and disabled the master transceiver. In this case, the terminal device may receive the indication information by using the WUR signal, thereby entering the dormancy on the first SCG, that is, a dormant BWP on each SCell in the first SCG may be activated.

For example, the terminal device may receive the indication information on a PCell or a PCG by using the wake up receiver, or may receive the indication information on an SCell or an SCG by using the wake up receiver. For example, the terminal device may receive the indication information on the first SCG, or may receive the indication information on an SCG different from the first SCG. This is not specifically limited in this application.

It should be understood that a solution in which the indication information is used to instruct the first SCell be in dormancy is similar to a solution in which the indication information is used to instruct the first SCG be in dormancy. To avoid repetition, details are not described herein again.

### Embodiment 2

In this embodiment, a terminal device receives indication information by using a WUR signal, where the indication information is used to instruct a first SCG to exit from dormancy.

When the terminal device has a wake up receiver, the terminal device may receive some wake-up signals related to energy saving, so that the terminal device can disable a master transceiver to implement electricity saving. When the master transceiver is disabled, the terminal device cannot detect any PDCCH.

When the first SCG is activated but has no data transmission, the terminal device may have enabled the wake up receiver and disabled the master transceiver. In addition, because the first SCG is activated, the first SCG may be in a dormancy. In this state, when the first SCG has data transmission, the first SCG needs to be instructed, by using the indication information, to exit from dormancy. If the terminal device receives the indication information by using a PDCCH, a master transceiver of a UE needs to be woken up first by using the WUR signal; and then, the master transceiver receives the indication information by using the PDCCH. For example, a bit in a dormancy indication field in the PDCCH corresponding to the first SCG is set to 1, thereby instructing the first SCG to exit from dormancy. However, in this process of waking up and then receiving, power consumption and a transmission delay of the terminal are increased.

In this embodiment, the indication information is received by using the WUR signal. The indication information can be received only when the wake up receiver is enabled, so that power consumption of the terminal device can be reduced. In other words, when the first SCG is activated and has data transmission, the terminal device may have enabled the wake up receiver and disabled the master transceiver. In this case, the terminal device may receive the indication information by using the WUR signal, thereby exiting dormancy on the first SCG, that is, a non-dormancy BWP on each SCell in the first SCG is activated. For example, a pre-defined non-dormancy BWP on each SCell in the first SCG is activated.

For example, the terminal device may receive the indication information on a PCell or a PCG by using the wake up receiver, or may receive the indication information on an SCell or an SCG by using the wake up receiver. For example, the terminal device may receive the indication information on the first SCG, or may receive the indication information on an SCG different from the first SCG. This is not specifically limited in this application.

It should be understood that a solution in which the indication information is used to instruct the first SCell be in dormancy is similar to a solution in which the indication information is used to instruct the first SCG be in dormancy. To avoid repetition, details are not described herein again.

FIG. 6 is a schematic diagram of instructing an SCG be in dormancy or exit from dormancy according to an embodiment of this application.

As shown in FIG. 6, a wake up receiver is enabled on a PCG of a terminal device; an activated BWP on an SCG 1 of the terminal device is a non-dormancy BWP; and an activated BWP on an SCG 2 of the terminal device is a non-dormancy BWP. The terminal device may receive a dormancy indication of the SCG 1 by using a WUR signal on a PCell. In this case, the terminal device activates a dormant BWP on the SCG 1. Further, the terminal device may also receive a dormancy exit indication of the SCG 1 by using a WUR signal on the PCell. In this case, the terminal device activates a non-dormancy BWP on the SCG 1. Similarly, the terminal device may receive a dormancy indication of the SCG 2 by using a WUR signal on the PCell. In this case, the terminal device activates a dormant BWP on the SCG 2.

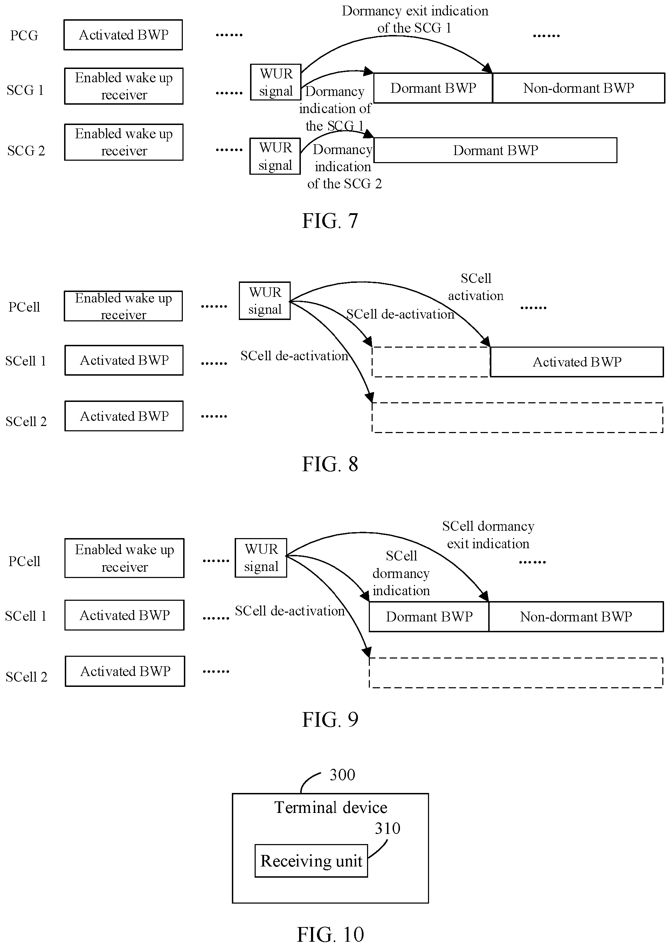

FIG. 7 is another schematic diagram of instructing an SCG be in dormancy or exit from dormancy according to an embodiment of this application.

As shown in FIG. 7, a BWP on a PCG of a terminal device is activated; wake up receivers are enabled on both an SCG 1 and an SCG 2 of the terminal device; an activated BWP on the SCG 1 of the terminal device is a non-dormancy BWP; and an activated BWP on the SCG 2 of the terminal device is a non-dormancy BWP. The terminal device may receive a dormancy indication of the SCG 1 by using a WUR signal on the SCG 1. In this case, the terminal device activates a dormant BWP on the SCG 1. Further, the terminal device may also receive a dormancy exit indication of the SCG 1 by using a WUR signal on the SCG 1. In this case, the terminal device activates a non-dormancy BWP on the SCG 1. Similarly, the terminal device may receive a dormancy indication of the SCG 2 by using a WUR signal on the SCG 2. In this case, the terminal device activates a dormant BWP on the SCG 2.

### Embodiment 3

In this embodiment, a terminal device receives indication information by using a WUR signal, where the indication information is used to instruct a first SCell to be activated or deactivated.

When the terminal device has a wake up receiver, the terminal device may receive some wake-up signals related to energy saving, so that the terminal device can disable a master transceiver to implement electricity saving. When the master transceiver is disabled, the terminal device cannot detect any PDCCH.

Because the terminal device may have enabled the wake up receiver and disabled the master transceiver, when the first SCell needs to be activated or deactivated, if the indication information is carried by an MAC CE, a PDCCH and a PDSCH need to be received. In other words, a master transceiver of a UE needs to be woken up first by using the wake-up signals; and then, the master transceiver is used to receive the PDCCH and the PDSCH, thereby obtaining the MAC CE. However, in this process of waking up and then receiving, power consumption and a transmission delay of the terminal are increased.

In this embodiment, the indication information is received by using the WUR signal. The indication information can be received only when the wake up receiver is enabled, so that power consumption of the terminal device can be reduced. In other words, because the terminal device may have enabled the wake up receiver and disabled the master transceiver, the terminal device may receive, in this case, the indication information by using the WUR signal, thereby activating or de-activating a downlink BWP and an uplink BWP that correspond to the first SCell. For example, an identifier of an activated downlink BWP may be a first active downlink BWP identifier (firstActiveDownlinkBWP-Id) configured by a network device. For example, an identifier of an activated uplink BWP may be a first active uplink BWP identifier (firstActiveUplinkBWP-Id) configured by a network device.

For example, the terminal device may receive the indication information on a PCell or a PCG by using the wake up receiver, or may receive the indication information on an SCell or an SCG by using the wake up receiver. For example, the terminal device may receive the indication information on the first SCell, or may receive the indication information on an SCell different from the first SCell. This is not specifically limited in this application.

FIG. 8 is a schematic diagram of instructing an SCG be in dormancy or exit from dormancy according to an embodiment of this application.

As shown in FIG. 8, a wake up receiver is enabled on a PCell of a terminal device; a BWP on an SCell 1 of the terminal device is in an activated state; and a BWP on an SCell 2 of the terminal device is in an activated state. The terminal device may receive a de-activation indication of the SCell 1 by using a WUR signal on the PCell. In this case, the terminal device de-activates a corresponding BWP on the SCell 1. Further, the terminal device may also receive an activation indication of the SCell 1 by using a WUR signal on the PCell. In this case, the terminal device activates a corresponding BWP on the SCell 1. Similarly, the terminal device may receive a de-activation indication of the SCell 2 by using a WUR signal on the PCell. In this case, the terminal device de-activates a corresponding BWP on the SCell 2.

It should be noted that Embodiment 1 and Embodiment 3 may be combined with each other. In other words, the indication information may be used to simultaneously instruct the first SCell be in dormancy/exit from dormancy and instruct the first SCell to be activated/be deactivated.

FIG. 9 is another schematic diagram of instructing an SCell be in dormancy or exit from dormancy according to an embodiment of this application.

As shown in FIG. 9, a wake up receiver is enabled on a PCell of a terminal device; a BWP on an SCell 1 of the terminal device is in an activated state; and a BWP on an SCell 2 of the terminal device is in an activated state. The terminal device may receive a dormancy indication of the SCG 1 by using a WUR signal on the PCell. In this case, the terminal device activates a dormant BWP on the SCG 1. Further, the terminal device may also receive a dormancy exit indication of the SCG 1 by using a WUR signal on the PCell. In this case, the terminal device activates a non-dormancy BWP on the SCG 1. Similarly, the terminal device may receive a de-activation indication of the SCell 2 by using a WUR signal on the PCell. In this case, the terminal device de-activates a corresponding BWP on the SCell 2.

It should be understood that FIG. 6 to FIG. 9 are merely examples of this application, and should not be construed as a limitation to this application.

For example, after receiving the indication information by using the WUR signal, the terminal device may further feed back acknowledgment information to a base station. Optionally, the acknowledgment information may be fed back by using an uplink WUR signal or another channel, for example, a PUCCH. Optionally, the uplink WUR signal is used to request the terminal device to be provided with a wake up transmitter (WUT). Optionally, the uplink WUR signal may be transmitted according to a backscattering method.

For another example, after the terminal device receives the indication information by using the WUR signal, the indication information takes effect after a pre-defined time interval or a time interval configured by a network. For example, when the pre-defined time interval or the time interval configured by the network expires after the terminal device receives the indication information, the terminal device causes at least one SCell be in dormancy, exit from dormancy, be activated, or be deactivated.

The foregoing describes in detail the preferred implementations of this application with reference to the accompanying drawings. However, this application is not limited to specific details in the foregoing implementations. Within the scope of the technical concepts of this application, various simple variations may be implemented to the technical solutions of this application, and these simple variations are all within the protection scope of this application. For example, specific technical features described in the foregoing specific implementations may be combined in any suitable manner in the case of no conflict. To avoid repetition, various possible combination manners are not described in this application. For another example, any combination may alternatively be performed between different implementations of this application, provided that the combination is not contrary to the idea of this application, the combination should also be considered as the content disclosed in this application.

The foregoing describes the method embodiments of this application in detail with reference to FIG. 1 to FIG. 9. The following describes the apparatus embodiments of this application in detail with reference to FIG. 10 to FIG. 13.

FIG. 10 is a schematic block diagram of a terminal device 300 according to an embodiment of this application.

As shown in FIG. 10, the terminal device 300 may include:
a receiving unit 310, configured to receive indication information by using a wake up radio WUR signal.

The indication information is used to instruct at least one secondary cell SCell be in dormancy, exit from dormancy, be activated, or be deactivated. The at least one SCell is a first SCell or a first secondary cell group SCG.

In some embodiments, the receiving unit 310 is specifically configured to:
receive, on a primary cell PCell or a primary cell group PCG, the indication information by using the WUR signal.

In some embodiments, the receiving unit 310 is specifically configured to:
receive, on a second SCell or a second SCG, the indication information by using the WUR signal.

In some embodiments, the first SCell is the second SCell, or the first SCell is different from the second SCell.

In some embodiments, the first SCG is the second SCG, or the first SCG is different from the second SCG.

In some embodiments, the indication information is used to instruct the at least one SCell be in dormancy; and the receiving unit 310 is further configured to:
activate a dormant BWP on each of the at least one SCell.

In some embodiments, the indication information is used to instruct the at least one SCell to exit from dormancy; and the receiving unit 310 is further configured to:
activate a non-dormancy BWP on each of the at least one SCell.

In some embodiments, the non-dormancy BWP is pre-defined.

In some embodiments, the indication information is used to instruct the at least one SCell to exit from dormancy; and the receiving unit 310 is further configured to:
maintain an activated BWP on each of the at least one SCell.

In some embodiments, the indication information is used to instruct the at least one SCell be in dormancy or exit from dormancy; and the receiving unit 310 is specifically configured to:
when the at least one SCell is dormant, receive the indication information by using the WUR signal.

In some embodiments, the receiving unit 310 is further configured to:
when the at least one SCell is non-dormancy, receive the indication information by using a physical downlink control channel PDCCH or downlink control information DCI.

It should be understood that the apparatus embodiments may correspond to the method embodiments, and for similar descriptions, reference may be made to the method embodiments. Specifically, the terminal device 300 shown in FIG. 10 may correspond to a corresponding body in the method 200 for executing embodiments of this application, and the foregoing and other operations and/or functions of the units in the terminal device 300 are respectively used to implement corresponding procedures in the methods provided in embodiments of this application. For brevity, details are not described herein again.

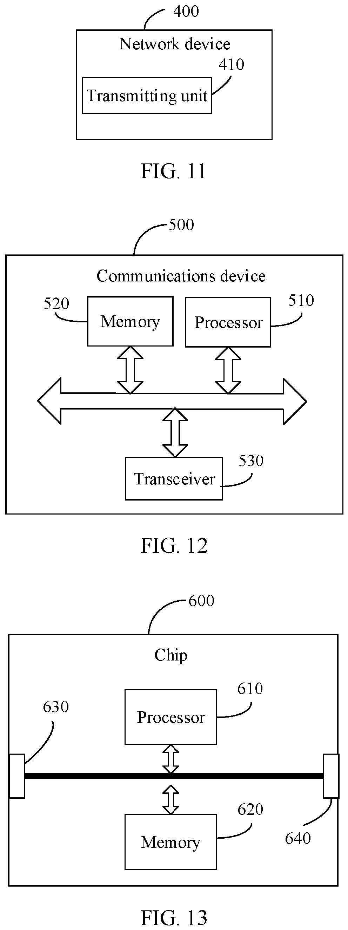

FIG. 11 is a schematic block diagram of a network device 400 according to an embodiment of this application.

As shown in FIG. 11, the network device 400 may include:
a transmitting unit 410, configured to transmit indication information by using a wake up radio WUR signal.

The indication information is used to instruct at least one secondary cell SCell be in dormancy, exit from dormancy, be activated, or be deactivated. The at least one SCell is a first SCell or a first secondary cell group SCG.

In some embodiments, the transmitting unit 410 is specifically configured to:
transmit, on a primary cell PCell or a primary cell group PCG, the indication information by using the WUR signal.

In some embodiments, the transmitting unit 410 is specifically configured to:
transmit, on a second SCell or a second SCG, the indication information by using the WUR signal.

In some embodiments, the first SCell is the second SCell, or the first SCell is different from the second SCell.

In some embodiments, the first SCG is the second SCG, or the first SCG is different from the second SCG.

In some embodiments, the indication information is used to instruct the at least one SCell be in dormancy or exit from dormancy.

The transmitting unit 410 is specifically configured to:
when the at least one SCell is dormant, transmit the indication information by using the WUR signal.

In some embodiments, the transmitting unit 410 is further configured to:
when the at least one SCell is non-dormancy, receive the indication information by using a physical downlink control channel PDCCH or downlink control information DCI.

It should be understood that the apparatus embodiments may correspond to the method embodiments, and for similar descriptions, reference may be made to the method embodiments. Specifically, the network device 400 shown in FIG. 11 may correspond to a corresponding body that performs the method 200 in embodiments of this application, and the foregoing and other operations and/or functions of the units in the network device 400 are respectively used to implement corresponding procedures in the methods provided in embodiments of this application. For brevity, details are not described herein again.

The foregoing describes the communications device in embodiments of this application from a perspective of a functional module with reference to the accompanying drawings. It should be understood that the functional module may be implemented in a hardware form, may be implemented in an instruction in a software form, or may be implemented in a combination of hardware and a software module. Specifically, the steps of the method embodiments in embodiments of this application may be completed by using an integrated logic circuit of hardware in a processor and/or an instruction in a form of software. The steps of the methods disclosed with reference to embodiments of this application may be directly executed by a hardware decoding processor, or may be executed by using a combination of hardware and a software module in a decoding processor. Optionally, the software module may be located in a mature storage medium in the art such as a random access memory, a flash memory, a read-only memory, a programmable read-only memory, an electrically erasable programmable memory, or a register. The storage medium is located in a memory. The processor reads information from the memory, and performs the steps in the foregoing method embodiments in combination with hardware in the processor.

For example, the receiving unit 310 or the transmitting unit 410 described above may be implemented by a transceiver.

FIG. 12 is a schematic structural diagram of a communications device 500 according to an embodiment of this application.

As shown in FIG. 12, the communications device 500 may include a processor 510.

The processor 510 may invoke a computer program from a memory and run the computer program to implement a method in embodiments of this application.

As shown in FIG. 12, the communications device 500 may further include a memory 520.

The memory 520 may be configured to store indication information, and may be further configured to store code, an instruction, and the like that are executed by the processor 510. The processor 510 may invoke a computer program from the memory 520 and run the computer program to implement a method in embodiments of this application. The memory 520 may be a separate component independent of the processor 510, or may be integrated into the processor 510.

As shown in FIG. 12, the communications device 500 may further include a transceiver 530.

The processor 510 may control the transceiver 530 to communicate with another device. Specifically, the processor 510 may transmit information or data to the another device, or receive information or data transmitted by the another device. The transceiver 530 may include a transmitting set and a receiving set. The transceiver 530 may further include an antenna, and a quantity of the antenna may be one or more.

It should be understood that components in the communications device 500 are connected by using a bus system. In addition to a data bus, the bus system further includes a power bus, a control bus, and a status signal bus.

It should be further understood that the communications device 500 may be a terminal device in embodiments of this application, and the communications device 500 may implement a corresponding procedure implemented by the terminal device in the methods in embodiments of this application. In other words, the communications device 500 in embodiments of this application may correspond to the terminal device 300 in embodiments of this application, and may correspond to a corresponding body that performs the method 200 according to embodiments of this application. For brevity, details are not described herein again. Similarly, the communications device 500 may be a network device in embodiments of this application, and the communications device 500 may implement a corresponding procedure implemented by the network device in the methods in embodiments of this application. In other words, the communications device 500 in this embodiment of this application may correspond to the network device 400 in embodiments of this application, and may correspond to a corresponding body that performs the method 200 according to embodiments of this application. For brevity, details are not described herein again.

In addition, an embodiment of this application further provides a chip.

For example, the chip may be an integrated circuit chip, which has a signal processing capability, and may implement or perform the methods, steps, and logical block diagrams disclosed in embodiments of this application. The chip may also be referred to as a system-level chip, a system chip, a chip system, a system-on-chip, or the like. Optionally, the chip may be applied to various communications devices, so that a communications device installed with the chip can perform the methods, steps, and logical block diagrams disclosed in embodiments of this application.

FIG. 13 is a schematic structural diagram of a chip 600 according to an embodiment of this application.

As shown in FIG. 13, the chip 600 includes a processor 610.

The processor 610 may invoke a computer program from a memory and run the computer program to implement a method in embodiments of this application.

As shown in FIG. 13, the chip 600 may further include a memory 620.

The processor 610 may invoke a computer program from the memory 620 and run the computer program to implement a method in embodiments of this application. The memory 620 may be configured to store indication information, and may be further configured to store code, an instruction, and the like that are executed by the processor 610. The memory 620 may be a separate component independent of the processor 610, or may be integrated into the processor 610.

As shown in FIG. 13, the chip 600 may further include an input interface 630.

The processor 610 may control the input interface 630 to communicate with another device or chip, and specifically, may obtain information or data transmitted by the another device or chip.

As shown in FIG. 13, the chip 600 may further include an output interface 640.

The processor 610 may control the output interface 640 to communicate with another device or chip, and specifically, may output information or data to the another device or chip.

It should be understood that the chip 600 may be applied to a network device in embodiments of this application, and the chip may implement a corresponding procedure implemented by the network device in the methods in embodiments of this application, or may implement a corresponding procedure implemented by a terminal device in the methods in embodiments of this application. For brevity, details are not described herein again.

It should be further understood that components in the chip 600 are connected by using a bus system. In addition to a data bus, the bus system further includes a power bus, a control bus, and a status signal bus.

The foregoing processor may include but is not limited to:
a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component.

The processor may be configured to implement or perform the methods, steps, and logical block diagrams disclosed in embodiments of this application. The steps of methods disclosed with reference to embodiments of this application may be directly executed by a hardware decoding processor, or may be executed by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

The foregoing memory includes but is not limited to:
a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synch link DRAM, SLDRAM), and a direct rambus random access memory (Direct Rambus RAM, DR RAM).

It should be noted that the memories described herein are intended to include these and any other suitable types of memories.

An embodiment of this application further provides a computer-readable storage medium, configured to store a computer program. The computer-readable storage medium stores one or more programs, and the one or more programs include an instruction. When the instruction is executed by a portable electronic device including a plurality of application programs, the portable electronic device can perform the wireless communication method provided in this application. Optionally, the computer-readable storage medium may be applied to a network device in embodiments of this application, and the computer program causes a computer to perform a corresponding procedure implemented by the network device in the methods in embodiments of this application. For brevity, details are not described herein again. Optionally, the computer-readable storage medium may be applied to a mobile terminal or a terminal device in embodiments of this application, and the computer program causes a computer to perform a corresponding procedure implemented by the mobile terminal or the terminal device in the methods in embodiments of this application. For brevity, details are not described herein again.

An embodiment of this application further provides a computer program product, including a computer program. Optionally, the computer program product may be applied to a network device in embodiments of this application, and the computer program causes a computer to perform a corresponding procedure implemented by the network device in the methods in embodiments of this application. For brevity, details are not described herein again. Optionally, the computer program product may be applied to a mobile terminal or a terminal device in embodiments of this application, and the computer program causes a computer to perform a corresponding procedure implemented by the mobile terminal or the terminal device in the methods in embodiments of this application. For brevity, details are not described herein again.

An embodiment of this application further provides a computer program. When the computer program is executed by a computer, the computer can perform the wireless communication methods provided in this application. Optionally, the computer program may be applied to a network device in embodiments of this application. When the computer program runs on a computer, the computer performs a corresponding procedure implemented by the network device in the methods in embodiments of this application. For brevity, details are not described herein again. Optionally, the computer program may be applied to a mobile terminal or a terminal device in embodiments of this application. When the computer program runs on a computer, the computer performs a corresponding procedure implemented by the mobile terminal or the terminal device in the methods in embodiments of this application. For brevity, details are not described herein again.

An embodiment of this application further provides a communications system. The communications system may include the terminal device and the network device that are described above, to form the communications system 100 shown in FIG. 1. For brevity, details are not described herein again. It should be noted that the term "system" and the like in this specification may also be referred to as a "network management architecture", a "network system", or the like.

It should be further understood that terms used in embodiments of this application and the appended claims are merely intended to describe specific embodiments, but are not intended to limit embodiments of this application. For example, the singular forms of "a/an", "said", "described above", and "the" used in embodiments of this application and the appended claims are also intended to include plural forms, unless the context clearly implies otherwise.

Persons of ordinary skill in the art may be aware that, units and algorithm steps in examples described in combination with embodiments disclosed in this specification can be implemented by electronic hardware or a combination of computer software and electronic hardware. Whether the functions are performed by hardware or software depends on particular applications and design constraints of the technical solutions. Those skilled in the art may use different methods for each specific application to implement the described functions, but such implementation shall not be considered as beyond the scope of embodiments of this application. When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

It may be aware by those skilled in the art that, for the purpose of convenient and brief description, for a detailed working process of the foregoing system, apparatus, and unit, reference may be made to a corresponding process in the foregoing method embodiments. Details are not described herein again. In the several embodiments provided in this application, it should be understood that the disclosed systems, apparatuses, and methods may be implemented in another manner. For example, the unit division, or module division, or component division in foregoing apparatus embodiments is merely a logical function division, and there may be other division in actual implementation. For example, a plurality of units or modules or components may be combined or integrated into another system, or some units or modules or components may be ignored or omitted. For another example, the foregoing units/modules/components described as separate/display components may be or may not be physically separated, that is, may be located in one place, or may be distributed on a plurality of network units. Some or all of the units/modules/components may be selected according to an actual need to achieve the objectives of embodiments of this application. Finally, it should be noted that the foregoing displayed or discussed mutual coupling or direct coupling or communication connections may be implemented by using some interfaces. Indirect couplings or communication connections between apparatuses or units may be implemented in electrical, mechanical, or other forms.

The foregoing descriptions are merely specific implementations of embodiments of this application, but the protection scope of embodiments of this application is not limited thereto. Any variation or replacement readily figured out by those skilled in the art within the technical scope disclosed in embodiments of this application shall fall within the protection scope of embodiments of this application. Therefore, the protection scope of embodiments of this application shall be subject to the protection scope of the claims.

## Claims

1. A wireless communication method, wherein the method is applicable to a terminal device, and the method comprises:
receiving indication information by using a wake up radio WUR signal,
wherein the indication information is used to instruct at least one secondary cell SCell be in dormancy, exit from dormancy, be activated, or be deactivated; and the at least one SCell is a first SCell or a first secondary cell group SCG.

2. The method according to claim 1, wherein the receiving indication information by using a wake up radio WUR signal comprises:
receiving, on a primary cell PCell or a primary cell group PCG, the indication information by using the WUR signal.

3. The method according to claim 1, wherein the receiving indication information by using a wake up radio WUR signal comprises:
receiving, on a second SCell or a second SCG, the indication information by using the WUR signal.

4. The method according to claim 3, wherein the first SCell is the second SCell, or the first SCell is different from the second SCell.

5. The method according to claim 3, wherein the first SCG is the second SCG, or the first SCG is different from the second SCG.

6. The method according to any one of claims 1 to 5, wherein the indication information is used to instruct the at least one SCell be in dormancy; and the method further comprises:
activating a dormant BWP on each of the at least one SCell.

7. The method according to any one of claims 1 to 5, wherein the indication information is used to instruct the at least one SCell to exit from dormancy; and the method further comprises:
activating a non-dormancy BWP on each of the at least one SCell.

8. The method according to claim 7, wherein the non-dormancy BWP is pre-defined.

9. The method according to any one of claims 1 to 5, wherein the indication information is used to instruct the at least one SCell to exit from dormancy; and the method further comprises:
maintaining an activated BWP on each of the at least one SCell.

10. The method according to any one of claims 1 to 9, wherein the indication information is used to instruct the at least one SCell be in dormancy or exit from dormancy; and
the receiving indication information by using a wake up radio WUR signal comprises:
when the at least one SCell is dormant, receiving the indication information by using the WUR signal.

11. The method according to claim 10, wherein the method further comprises:
when the at least one SCell is non-dormancy, receiving the indication information by using a physical downlink control channel PDCCH or downlink control information DCI.

12. A wireless communication method, wherein the method is applicable to a network device, and the method comprises:
transmitting indication information by using a wake up radio WUR signal,
wherein the indication information is used to instruct at least one secondary cell SCell be in dormancy, exit from dormancy, be activated, or be deactivated; and the at least one SCell is a first SCell or a first secondary cell group SCG.

13. The method according to claim 12, wherein the transmitting indication information by using a wake up radio WUR signal comprises:
transmitting, on a primary cell PCell or a primary cell group PCG, the indication information by using the WUR signal.

14. The method according to claim 12, wherein the transmitting indication information by using a wake up radio WUR signal comprises:
transmitting, on a second SCell or a second SCG, the indication information by using the WUR signal.

15. The method according to claim 14, wherein the first SCell is the second SCell, or the first SCell is different from the second SCell.

16. The method according to claim 14, wherein the first SCG is the second SCG, or the first SCG is different from the second SCG.

17. The method according to any one of claims 12 to 16, wherein the indication information is used to instruct the at least one SCell be in dormancy or exit from dormancy; and
the receiving indication information by using a wake up radio WUR signal comprises:
when the at least one SCell is dormant, transmitting the indication information by using the WUR signal.

18. The method according to claim 17, wherein the method further comprises:
when the at least one SCell is non-dormancy, receiving the indication information by using a physical downlink control channel PDCCH or downlink control information DCI.

19. A terminal device, comprising:
a receiving unit, configured to receive indication information by using a wake up radio WUR signal,
wherein the indication information is used to instruct at least one secondary cell SCell be in dormancy, exit from dormancy, be activated, or be deactivated; and the at least one SCell is a first SCell or a first secondary cell group SCG.

20. The terminal device according to claim 19, wherein the receiving unit is specifically configured to:
receive, on a primary cell PCell or a primary cell group PCG, the indication information by using the WUR signal.

21. The terminal device according to claim 19, wherein the receiving unit is specifically configured to:
receive, on a second SCell or a second SCG, the indication information by using the WUR signal.

22. The terminal device according to claim 21, wherein the first SCell is the second SCell, or the first SCell is different from the second SCell.

23. The terminal device according to claim 21, wherein the first SCG is the second SCG, or the first SCG is different from the second SCG.

24. The terminal device according to any one of claims 19 to 23, wherein the indication information is used to instruct the at least one SCell be in dormancy; and the receiving unit is further configured to:
activate a dormant BWP on each of the at least one SCell.

25. The terminal device according to any one of claims 19 to 23, wherein the indication information is used to instruct the at least one SCell to exit from dormancy; and the receiving unit is further configured to:
activate a non-dormancy BWP on each of the at least one SCell.

26. The terminal device according to claim 25, wherein the non-dormancy BWP is pre-defined.

27. The terminal device according to any one of claims 19 to 23, wherein the indication information is used to instruct the at least one SCell to exit from dormancy; and the receiving unit is further configured to:
maintain an activated BWP on each of the at least one SCell.

28. The terminal device according to any one of claims 19 to 27, wherein the indication information is used to instruct the at least one SCell be in dormancy or exit from dormancy; and
the receiving unit is specifically configured to:
when the at least one SCell is dormant, receive the indication information by using the WUR signal.

29. The terminal device according to claim 28, wherein the receiving unit is further configured to:
when the at least one SCell is non-dormancy, receive the indication information by using a physical downlink control channel PDCCH or downlink control information DCI.

30. A network device, comprising:
a transmitting unit, configured to transmit indication information by using a wake up radio WUR signal,
wherein the indication information is used to instruct at least one secondary cell SCell be in dormancy, exit from dormancy, be activated, or be deactivated; and the at least one SCell is a first SCell or a first secondary cell group SCG.

31. The network device according to claim 30, wherein the transmitting unit is specifically configured to:
transmit, on a primary cell PCell or a primary cell group PCG, the indication information by using the WUR signal.

32. The network device according to claim 30, wherein the transmitting unit is specifically configured to:
transmit, on a second SCell or a second SCG, the indication information by using the WUR signal.

33. The network device according to claim 32, wherein the first SCell is the second SCell, or the first SCell is different from the second SCell.

34. The network device according to claim 32, wherein the first SCG is the second SCG, or the first SCG is different from the second SCG.

35. The network device according to any one of claims 31 to 34, wherein the indication information is used to instruct the at least one SCell be in dormancy or exit from dormancy; and
the transmitting unit is specifically configured to:
when the at least one SCell is dormant, transmit the indication information by using the WUR signal.

36. The network device according to claim 35, wherein the transmitting unit is further configured to:
when the at least one SCell is non-dormancy, receive the indication information by using a physical downlink control channel PDCCH or downlink control information DCI.

37. A terminal device, comprising:
a processor and a memory, wherein the memory is configured to store a computer program, and the processor is configured to invoke the computer program stored in the memory and run the computer program to perform the method according to any one of claims 1 to 11.

38. A network device, comprising:
a processor and a memory, wherein the memory is configured to store a computer program, and the processor is configured to invoke the computer program stored in the memory and run the computer program to perform the method according to any one of claims 12 to 18.

39. A chip, comprising:
a processor, configured to invoke a computer program from a memory and run the computer program, so that a device installed with the chip performs the method according to any one of claims 1 to 11 or the method according to any one of claims 12 to 18.

40. A computer-readable storage medium, configured to store a computer program, wherein the computer program causes a computer to perform the method according to any one of claims 1 to 11 or the method according to any one of claims 12 to 18.

41. A computer program product, comprising computer program instructions, wherein the computer program instructions cause a computer to perform the method according to any one of claims 1 to 11 or the method according to any one of claims 12 to 18.

42. A computer program, wherein the computer program causes a computer to perform the method according to any one of claims 1 to 11 or the method according to any one of claims 12 to 18.
